# EUROPÄISCHE PATENTSCHRIFT

(11) **EP 0 601 492 B1**
(45) Veröffentlichungstag und Bekanntmachung des Hinweises auf die Patenterteilung: **27.10.1999**
(21) Anmeldenummer: 93119498.9
(22) Anmeldetag: 03.12.1993
(51) Int. Cl.: C08F 220/18, C09D 133/10, C09D 151/00

(54) **Reinaliphaten-lösliches pulverförmiges Bindemittel für Anstrichfarben**
Powder binder soluble in pure aliphatic solvents for coating compositions
Liant pour peintures en poudre soluble dans les aliphatiques purs

(30) Priorität: 10.12.1992 DE 9216813 U
(43) Veröffentlichungstag der Anmeldung: 15.06.1994
(73) Patentinhaber: Röhm GmbH, 64293 Darmstadt (DE)
(72) Erfinder: Elser, Wilhelm, D-64347 Griesheim (DE); Fölsch, Karl Josef, Dr., D-55128 Mainz (DE); Rossberg, Peter, Dr., D-64342 Seeheim-Jugenheim (DE); Tessmer, Dieter, D-65428 Rüsselsheim (DE); Wicke, Michael, D-64342 Seeheim-Jugenheim (DE)

(56) Entgegenhaltungen:
- EP-A- 0 138 033
- EP-A- 0 287 842
- EP-A- 0 370 339
- EP-A- 0 452 200
- FR-A- 2 117 189

## Beschreibung

Die Erfindung betrifft ein reinaliphaten-lösliches pulverförmiges Bindemittel für Anstrichfarben, enthaltend pulverförmige Polymerisatteilchen auf Basis von Methacrylsäureestern sowie eine Lösung des Polymerisats in aromatenfreiem Benzin und eine daraus bereitete Anstrichfarbe.

### Stand der Technik

Aus der deutschen Patentschrift 2 060 545 ist ein Bindemittel für lufttrocknende Anstrichfarben auf Basis eines Copolymerisats von Isobutylmethacrylat, Acrylestern höherer Alkohole und geringen Anteilen an polaren Comonomeren, wie Hydroxyalkylestern der Acryl-und/oder Methacrylsäure bekannt. Dieses Bindemittel ist in aromatenarmen, jedoch nicht in reinaliphatischen Benzintypen löslich. Wegen des unerläßlichen Anteils an stark riechenden und toxischen Aromaten im Lösemittel eignen sich Anstrichfarben auf dieser Basis zwar für Außenanstriche, jedoch nicht für Innenanwendungen. Für schnell trocknende Innenanstrichfarben werden Bindemittel benötigt, die in geruchlosen, nichttoxischen Reinaliphaten löslich sind.

EP-A-0 138 033 beschreibt pulverförmige Bindemittel, die Zweistufig aufgebaut sind und eine Schale aus einem Copolymerisat aus Isobutyl - oder Cyclohexylmethacrylat, 0.05 bis 4 Gew.-% vernetzenden Monomeren und gegebenenfalls Vinylaromaten oder nicht benzinlöslichen Comonomeren aufweisen. Diese Copolymerisate sind in Benzin quellbar oder bilden Gele darin.

### Aufgabe und Lösung

Die Löslichkeit in Reinaliphaten läßt sich durch Steigerung des Anteils an langkettigen Alkylestern der Acryl- und/oder Methacrylsäure am Aufbau des Bindemittels zwar erreichen, jedoch haben diese Bindemittel Nachteile, die ihrem Einsatz in der Praxis Grenzen gesetzt haben. In Form von Granulaten, Perlen oder Pulvern sind sie etwas klebrig und dadurch nur begrenzt lagerfähig. Vor allem bei sommerlichen Lagertemperaturen neigen sie zum Zusammenbacken, was die Handhabung des festen Bindemittels erschwert und seine Auflösung verzögert. Zwar läßt sich die Blockfestigkeit des Polymerisats verbessern, wenn man den Anteil des Isobutylmethacrylats auf Kosten des langkettigen Alkylmethacrylats erhöht. Dabei geht jedoch die Löslichkeit in Reinaliphaten verloren.

Der Erfindung liegt die Aufgabe zugrunde, die Blockfestigkeit eines in reinaliphatischen Benzintypen löslichen Bindemittels für Anstrichfarben auf Basis von Methacrylestern so zu erhöhen, daß es als feines, schnellösliches Pulver auch bei sommerlichen Temperaturen, d.h im Bereich von 25 bis 40^{o}C, lagerfähig bleibt, ohne zu verblocken oder zu verklumpen.

Die Aufgabe wird durch das reinaliphaten-lösliche pulverförmige Bindemittel für Anstrichfarben gemäß der Erfindung gelöst. Es enthält pulverförmige Polymerisatteilchen, die wenigstens an der Teilchenoberfläche aus einem Copolymerisat aus:
60 bis 95 Gew.-% Einheiten der hartmachenden Monomeren
A) 5 bis 60 Gew.-% Einheiten des Isobutylmethacrylats,
B) 10 bis 54,5 Gew.-% Einheiten von Cycloalkylmethacrylaten und 5 bis 40 Gew.-% Einheiten von wenigstens einem aliphatenlöslich machenden Monomeren aus der Gruppe
C) Alkylmethacrylate mit 6 bis 18 Kohlenstoffatomen im Alkylrest bestehen, wobei alle Gewichtsprozente jeweils auf das Gewicht des Copolymerisats bezogen sind. Die Monomeren A, B und C bilden zusammengenommen in der Regel wenigstens 90 Gew.-% des Copolymerisats.

Mit Copolymerisaten aus den Bestandteilen A und C allein läßt sich die gestellte Aufgabe nicht erfüllen. Wenn der Anteil des Isobutylmethacrylats hoch genug ist, um Blockfestigkeit zu gewährleisten, ist das Copolymerisat nicht mehr aliphatenlöslich. Bei höherem Anteil an längerkettigen Alkylmethacrylaten läßt sich zwar die Aliphatenlöslichkeit, jedoch nicht die Blockfestigkeit erreichen. Cycloalkylmethacrylate haben die besondere Eigenschaft, daß sie einerseits harte Polymerisate und Copolymerisate ergeben, andererseits die Löslichkeit in reinaliphatischen Benzinkohlenwasserstoffen fördern, wenn auch ihre Homopolymerisate in aromatenfreiem Benzin nicht ausreichend löslich sind. Erst durch den Anteil der höheren Alkylmethacrylate wird die Eigenschaftskombination von ausreichender Blockfestigkeit und Benzinlöslichkeit erreicht.

Die Löslichkeit von Acrylpolymerisaten aus Alkylmethacrylaten mit mehr als 3 Kohlenstoffatomen im Alkylrest und Cycloalkylmethacrylaten in aromatenarmen Benzintypen war aus der EP-A 370 339 bekannt, nicht jedoch die relative Härte und Blockfreiheit solcher Copolymerisate, wenn sie im Sinne der Patentansprüche zusammengesetzt sind.

### Ausführung der Erfindung

Im Rahmen der Erfindung läßt sich die gleichzeitige Erfüllung der Anforderungen an leichte Löslichkeit in aromatenfreien, reinaliphatischen Benzinkohlenwasserstoffen und Blockfreiheit in Form eines feinen Pulvers bei Temperaturen zwischen 25 und 40°C durch die Abstimmung der hartmachenden und der aliphatenlöslich machenden Monomerkomponenten beim Aufbau des Copolymerisats erreichen.

Isobutylmethacrylat wirkt relativ hartmachend, vermindert jedoch die Aliphatenlöslichkeit. Auf Isobutylmethacrylat könnte im Interesse einer guten Aliphatenlöslichkeit und Härte ganz verzichtet werden, jedoch wären dann hohe Anteile von den verhältnismäßig teuren Cycloalkylmethacrylaten erforderlich. Aus Gründen der Wirtschaftlichkeit wird der Anteil des verhältnismäßig preisgünstigen Isobutylmethacrylats so hoch wie möglich gewählt. Er beträgt 5 bis 60 Gew.-%, vorzugsweise 20 bis 50 Gew.-%.

Unter den Cycloalkylmethacrylaten sind Cyclohexylmethacrylat und 3,3,5-Trimethylcyclohexylmethacrylat besonders bevorzugt. Der Anteil dieser Komponente an dem Copolymerisat beträgt 10 bis 54.5 Gew.-% und vorzugsweise 10 bis 40 Gew.-%, insbesondere 20 bis 30 Gew.-%.

Neben den Block- und Löslichkeitseigenschaften der erfindungsgemäßen Bindemittel spielt ihre Dispergierwirksamkeit für Pigmente und Füllstoffe eine wichtige Rolle. Sie wird durch 0,1 bis 10 Gew.-% an Einheiten von funktionellen Comonomeren mit polaren Gruppen gefördert. Da sie die Aliphatenlöslichkeit beeinträchtigen, werden sie in möglichst geringer Menge, vorzusweise 0,1 bis 2 Gew.-% eingestzt. Bevorzugt sind Comonomere mit einer Hydroxylgruppe, wie Hydroxyethyl- oder Hydroxypropyl-acrylat und -methacrylat. Weitere geeignete funktionelle Gruppen sind Carboxylgruppen, die von Einheiten von Acryl- oder Methacrylsäure, Malein-, Fumar- oder Itakonsäure stammen können, tertiäre Aminogruppen, die in Form entsprechend substituierter Alkylester der Acryl- und/oder Methacrylsäure eingebaut sein können, in geringerem Maße auch Carbonamidogruppen, beispielsweise von Acrylamid oder Methacrylamid.

Die erfindungsgemäßen Copolymerisate lassen sich aus den Monomeren A, B, C in den beanspruchten Mengenverhältnissen nach üblichen Verfahren der radikalischen Polymerisation, wie der Emulsions-, Perl- oder Substanzpolymerisation herstellen.

Bevorzugt ist die ein- oder mehrstufige Emulsionspolymerisation in wäßriger Phase in Gegenwart eines Reglers sowie üblicher Emulgiermittel und radikalischer Initiatoren. Man erhält eine wäßrige Dispersion, aus der das Polymerisatpulver vorzugsweise durch Sprühtrocknen gewonnen wird. Dabei werden, insbesondere im Bereich des Luftaustritts, niedrige Trocknungstemperaturen, bei denen die Latexteilchen nicht völlig miteinander verschmelzen, bevorzugt. Geeignete Austrittstemperaturen liegen z.B. im Bereich von 50 bis 70^{o}C. Je weniger die Latexteilchen innerhalb der Pulverkörnchen miteinander verschmolzen sind, um so schneller löst sich das Pulver in dem Lacklösemittel.

Ein anderes geeignetes Herstellungsverfahren ist die Suspensionspolymerisation in wäßriger Phase. Dabei wird die Monomerenmischung A, B, C mit einem ausreichenden Gehalt gelöster, radikalbildender Initiatoren in Gegenwart geeigneter Verteilungsmittel, wie in Gegenwart von Tensiden gefälltem Aluminiumhydroxyd, zu Tröpfchen einer durchschnittlichen Größe von 0,005 bis 1 mm verteilt, die beim Erwärmen auf z.B. 80^{o}C zu Polymerisatperlen aushärten. Auf einen hohen, im wesentlichen vollständigen Umsatz der eingesetzten Monomeren wird Wert gelegt. Je feiner die Perlen sind, umso schneller lassen sie sich lösen. Die Perlgröße wird in an sich bekannter Weise durch die Art und Menge des Verteilungsmittels und die Rührgeschwindigkeit beeinflußt. Die Polymerisatperlen können durch Filtrieren oder Zentrifugieren von der wäßrigen Phase getrennt und durch Waschen mit Wasser von anhaftenden Resten des Verteilungsmittels befreit werden. Die feuchten Polymerisatperlen werden bei Temperaturen von 40 bis 70^{o}C z.B. in einem Trockenschrank oder einem Flugtrockner getrocknet.

Bei der Polymerisation in Abwesenheit von Lösungs- oder Verteilungsmitteln erhält man das feste Polymerisat z.B. in Form von Blöcken oder Tafeln, die mit einer geeigneten Mühle zu einem Pulver vermahlen werden. Man kann das Polymerisat auch zunächst im thermoplastischen Zustand mittels eines Extruders zu dünnen Strängen pressen und diese zu einem Granulat zerkleinern. Es ist zweckmäßig, das Polymerisat vor dem Pulverisieren auf eine niedrige Temperatur abzukühlen, bei der es spröde ist und die Bildung feiner Pulverteilchen erleichtert. Es werden Pulverkörnchen im Bereich von 0,005 bis 3 mm angestrebt.

Die Lösungsviskosität des erfindungsgemäßen Copolymerisats muß in einem für Bindemittel von Anstrichfarben geeigneten Bereich liegen. Durch Mitverwendung von Reglern bei der Polymerisation wird das Molekulargewicht des Copolymerisats vorzugsweise so begrenzt, daß die reduzierte Viskosität, gemessen in Chloroform, im Bereich von 10 bis 70 ml/g, vorzugsweise 20 bis 40 ml/g liegt. Dies gilt für jedes der oben beschriebenen Polymerisationsverfahren.

Bindemittel in dem angegebenen Viskostätsbreich sind unvernetzt. Zur Herstellung einer Anstrichfarbe werden häufig verdickende Zusätze mitverwendet, um günstige Verarbeitungseigenschaften, d.h. kurz abreißendes Fließverhalten zu erreichen oder um die Stabilität zu erhöhen und Pigmentabsetzungen zu vermeiden. In reinaliphatischen Anstrichfarben müssen diese Zusätze ebenso wie das eigentliche Bindemittel in aromatenfreien Benzinkohlenwasserstoffen löslich bzw. quellbar und mit diesem verträglich sein. Für diesen Zweck eignen sich die erfindungsgemäßen Bindemittel, wenn sie schwach vernetzt bzw. verzweigt sind. Zu ihrem Aufbau wird neben den Monomeren der Gruppen A, B und C zusätzlich eine geringe Menge eines mehrfach äthylenisch ungesättigtes, radikalisch polymerisierbares Monomeren mitverwendet, dessen Anteil jedoch so begrenzt sein muß, daß das Polymerisat noch kolloidal löslich ist. Geeignet ist z.B. ein Zusatz von 0,1 bis 2 Gew.-%, bezogen auf das Gesamtgewicht der Monomeren, an Allylmethacrylat, Glykoldimethacrylat oder 1,4-Butandioldimethacrylat.

Für die Blockeigenschaften sind die Polymerisateigenschaften an der Oberfläche der Pulverteilchen maßgebend. Um Verblocken und Verklumpen zu vermeiden, genügt es, wenn die Pulverteilchen nur an der Oberfläche aus einer Schicht des erfindungsgemäßen Copolymerisats bestehen, während das Innere aus einem reinaliphatenlöslichen, als Bindemittel für Anstrichfarben geeigneten Polymerisat bestehen kann, das in der herzustellenden Lösung in Benzinkohlenwasserstoffen mit dem Copolymerisat der Schale verträglich sein muß, aber eine höhere Klebrigkeit oder Blockneigung haben kann. Auf diese Weise läßt sich der zum Erreichen der Blockfestigkeit erforderliche Anteil an den verhältnismäßig teuren Cycloalkylmethacrylaten, bezogen auf das gesamte Bindemittel, deutlich vermindern, ohne auf deren vorteilhafte Wirkung zu verzichten.

Die Oberflächenschicht aus dem nicht klebrigen Polymerisat braucht nicht aus einer geschlossenen Schale zu bestehen. Vielmehr genügt es, wenn es als Inseln auf der Oberfläche der Teilchen deponiert ist und als Abstandhalter zwischen den einzelnen Körnchen wirkt. Pulverförmige Polymerisatteilchen mit einer derartigen Kern-Schale-Struktur sind auf verschiedene Weise herstellbar, z.B. durch mehrstufige Emulsionspolymerisation, wobei in einer ersten Polymerisationsstufe ein gegebenenfalls stärker klebendes Kernpolymerisat und in einer zweiten Stufe, ohne daß neue Teilchen gebildet werden, das Schalenpolymerisat aus den Monomeren A, B und C erzeugt wird.

Die Blockfestigkeit eines Perlpolymerisats kann auf entsprechende Weise dadurch gesteigert werden, daß man nach abgeschlossener Perlpolymerisation auf die Polymerisatperlen ein haftendes Deposit aus einer gemäß der Erfindung aufgebauten Acrylharzdispersion aufbringt. Ein geeignetes Verfahren zur Depositbildung ist aus der EP-B 82 455 bekannt; es besteht darin, der wäßriges Phase der Perlpolymerisation eine kleine Menge der Acrylharzdispersion zuzusetzen und durch Fällung, z.B. mit Salzen oder Säuren, auf den Perlen abzuscheiden. Es genügt eine kleine Menge von z.B. 0,5 bis 5 Gew.-%, eines besonders harten reinaliphatenlöslichen Bindemittelpulvers gemäß der Erfindung. Geeignet sind z.B. Emulsiomspolymerisate aus 90-95 Gew.-% Cycloalkylmethacrylaten und 5-10 Gew.-% langkettigen Alkylmethacrylaten. Damit läßt sich eine verhältnismäßig niedrige Blockfestigkeit des Bindemittelpulvers weitgehend ausgleichen.

### Anwendung des Copolymerisats als Bindemittel

Das pulverförmige Bindemittel kann bis zur Verwendung in Säcken, Trommeln, Silos und ähnlichen Pulverbehältern gelagert und transportiert werden, ohne daß die pulverige Beschaffenheit - selbst bei sommerlichen Temperaturen - verlorengeht.

Zur Herstellung von Anstrichfarben wird das Polymerisatpulver in dem gewünschten Lacklösemittel, vorzugsweise aromatenfreiem Benzin mit einem Siedebereich von 60 bis 200^{o}C gelöst. Geeignete Bindemittelkonzentrationen liegen je nach Anwendungszweck zwischen 5 uns 30 Gew.-%. In die Bindemittellösung werden die gewünschten Pigmente, Füllstoffe und Hilfsstoffe eingerührt und dispergiert. Man erhält lufttrocknende Anstrichfarben, die bei Verwendung von Reinaliphaten als Lösemittel praktisch geruchlos trocknen.

Die oben erwähnten, schwach vernetzten erfindungsgemäßen Polymerisate können zur Modifizierung der Viskosität und der Verarbeitungseigenschaften als zusätzliche Bindemittel mit Verdickungswirkung mitverwendet werden. Zusätze von 5 bis 20 Gew.-%, bezogen auf den Gesamtbindemittelgehalt, sind dafür in der Regel ausreichend.

### BEISPIELE

### Herstellung von Bindemitteln

In einem Reaktionsgefäß von 2 l Fassungsvermögen, ausgerüstet mit Heiz- und Kühlvorrichtungen, Rückflußkühler, Rührwerk und Zulaufgefäß, wird eine Lösung von 0,347 g C₁₅-Paraffinsulfonat-Na-Salz als Emulgiermittel und 0,495 g Ammoniumperoxodisulfat als radikalischer Initiator in 396 g entsalztem Wasser bei 20^{o}C bereitet auf 80^{o}C erwärmt. Unter Rühren wird innerhalb von 4 Stunden eine Monomeremulsion aus den nachfolgenden Bestandteilen gleichmäßig zudosiert:

| | |
|---|---|
| 461,7 g | Isobutylmethacrylat |
| 182,3 g | 3,3,5-Trimethylcyclohexylmethacrylat |
| 162,0 g | 2-Ethylhexylmethacrylat |
| 4,05 g | 2-Hydroxypropylmethacrylat |
| 2,84 g | Dodecylmercaptan als Regler |
| 7,43 g | C₁₅-Paraffinsulfonat-Na-Salz |
| 608,7 g | entsalztes Wasser |

Anschließend wird der Ansatz noch eine Stunde bei 80^{o}C gerührt und auf Raumtemperatur abgekühlt. Bei 70^{o}C werden zur Polymerisation restlicher Monomerer 1,01 g 1,4-Diisopropylbenzolmonohydroperoxid und 0,406 g Na-Hydroxymethylsulfinat zugesetzt. Bei 35^{o}C wird die Dispersion filtriert. Sie hat einen Feststoffgehalt von 45 Gew.-%.

In einem Labor-Zerstäubungstrockner (Niro Atomizer, Typ Minor Production), ausgerüstet mit Saugventilator, Lufterhitzer, Dosiervorrichtung und Zerstäuberscheibe, wird die Dispersion zu einem Pulver (A) getrocknet. Sie wird mittels der Dosiervorrichtung mit einem Durchsatz von 6,4 kg/h über einen Flüssigkeitsverteiler auf die mit 20000 UpM rotierende Zerstäuberscheibe in den Sprühtrocknungsturm eingeführt. Die Lufttemperatur beträgt am Eintritt 134-138°C und am Austritt 60-62^{o}C. Dort wird das Pulver vom Luftstrom abgetrennt und in einem Pulverbehälter aufgefangen.

Auf die gleiche Weise werden drei weitere Bindemittelpulver B - D mit Zusammensetzungen gemäß nachfolgender Tabelle hergestellt:

| Zusammensetzung | A | B | C | D |
|---|---|---|---|---|
| Isobutylmethacrylat | 57 | 57 | 44,5 | 35 |
| 3,3,5-Trimethyl-Cyclohexylmethacrylat | 22,5 | 32,5 | 35 | 54,5 |
| 2-Ethylhexylmethacrylat | 20 | 10 | 20 | 10 |
| 2-Hydroxypropylmethacrylat | 0,5 | 0,5 | 0,5 | 0,5 |
| | | | | |
| pH-Wert | 2,8 | 2,8 | 2,8 | 2,8 |
| Latexteilchendurchmesser in nm | 250 | 225 | 212 | 232 |
| red. Viskosität in CHCl₃ bei 20^{o}C, in ml/g | 31 | 30 | 28 | 26 |

Das Bindemittel A ist bis -5°C, die Bindemittel B bis D bis -10°C in reinaliphatischem Lösemittel (techn. Isododekan) klar löslich. Zur Prüfung der Blockfestigkeit wird eine Pulverschüttung des Bindemittels in einem Zylinder 16 Stunden bei 40°C mit 160 g/cm² belastet und nach Entlastung die Rieselfähigkeit geprüft. Lediglich das Bindemittel A zeigte ein geringes, leicht wieder lösbares Verbacken, das die Anwendbarkeit nicht beeinträchtigt. Alle anderen Bindemittel blieben rieselfähig.

### Herstellung von Anstrichfarben

Aus jeweils 90 g der Bindemittel A bis D und jeweils 110 g techn. Isododekan (Solvent ID) werden im Dissolver 45-%ige Bindemittellösungen bereitet.
Zur Herstellung von jeweils 1 kg geruchloser Wandfarbe zur Innenanwendung werden in einem Rührgefäß vorgelegt:

| | |
|---|---|
| 200 g | der Bindemittel lösung |
| 87 g | techn. Isododekan |
| 3 g | Sojalecithin als Netzmittel |
| 33 g | Pyromellitsäureester als Weichmacher Unter Rühren werden folgende Bestandteile hinzugefügt: |
| 63 g | Kieselgur |
| 168 g | Rutil-Titandioxid |
| 346 g | Calciumcarbonat-Füllstoffgemisch |
| 11 g | Verdickungsmittel auf Acrylatbasis (sprühgetrocknetes Emulsionspolymerisat aus Cycloalkylmethacrylat, Isooctyl-methacrylat und Allylmethacrylat) |
| 89 g | techn. Isododekan |

Die Anstrichfarben lassen sich mit Pinseln oder Rollen auf Putzuntergründe, Rauhfasertapeten und Textiltapeten auftragen und trocknen bei Raumtemperatur rasch und nahezu geruchlos zu harten, mechanisch widerstandsfähigen Anstrichen auf. Durch die Art und Menge der eingesetzten Pigmente und Füllstoffe können die Anstriche in bekannter Weise auf den gewünschten Glanzgrad eingestellt werden.

Da die verwendeten reinaliphatischen Lösemittel viele Kunststoffe, wie z.B. Polystyrol, nicht anlösen und sich darüberhinaus durch gute Witterungsbeständigkeit auszeichnen, sind die im Sinne der Erfindung aufgebauten Farben auch im Außenbereich, insbesondere zum Beschichten von Polystyrolschaumstoffen, mit Vorteil einsetzbar, was auf dem Gebiet der Wärmedämmung von Bedeutung ist.

## Patentansprüche

1. Reinaliphaten-lösliches pulverförmiges Bindemittel für Anstrichfarben, enthaltend pulverförmige Polymerisatteilchen, die wenigstens an der Teilchenoberfläche aus einem Copolymerisat aus: 60 bis 95 Gew.-% Einheiten der hartmachenden Monomeren
A) 5 bis 60 Gew.-% Einheiten des Isobutylmethacrylats,
B) 10 bis 54,5 Gew.-% Einheiten von Cycloalkylmethacrylaten
sowie 5 bis 40 Gew.-% Einheiten von wenigstens einem aliphatenlöslich machenden Monomeren aus der Gruppe
C) Alkylmethacrylate mit 6 bis 18 Kohlenstoffatomen im Alkylrest bestehen, wobei alle Gewichtsprozente jeweils auf das Gewicht des Copolymerisats bezogen sind.

2. Bindemittel nach Anspruch 1, dadurch gekennzeichnet, daß das Copolymerisat 0,1 bis 10 Gew.-% an Einheiten von funktionellen Comonomeren mit polaren Gruppen enthält.

3. Bindemittel nach Anspruch 2, dadurch gekennzeichnet, daß das funktionelle Comonomer eine Hydroxylgruppe enthält.

4. Bindemittel nach einem oder mehreren der Ansprüche 1 bis 3 mit Verdickungswirkung, dadurch gekennzeichnet, daß das Polymerisat 0,1 bis 2 Gew.-% eines mehrfach äthylenisch ungesättigten, radikalisch polymerisierbaren Monomeren enthält.

5. Bindemittel nach einem oder mehreren der Ansprüche 1 bis 4, dadurch gekennzeichnet, daß die Pulverteilchen aus einem aliphatenlöslichen Kernmaterial und einem aliphatenlöslichen Hüllmaterial bestehen, wobei das Kernmaterial aus einem Polymerisat oder Copolymerisat mit einem höheren Anteil an Einheiten eines Alkylmethacrylats mit 6 bis 12 Kohlenstoffatomen im Alkylrest als das Schalenmaterial besteht, und das Schalenmaterial ein Copolymer gemäß einem oder mehreren der Ansprüche 1 bis 3 ist.

6. Bindemittel nach Anspruch 5, dadurch gekennzeichnet, daß es ein ummanteltes Perlpolymerisat mit einem mittleren Teilchendurchmesser von 0,005 bis 1 mm ist.

7. Bindemittel nach Anspruch 5, dadurch gekennzeichnet, daß es ein sprühgetrocknetes Emulsionspolymerisat mit Kern-Schale-Aufbau ist.

8. Bindemittellösung, enthaltend ein gelöstes Copolymer gemäß einem oder mehreren der Ansprüche 1 bis 7 und aromatenfreies Benzin als Lösemittel.

9. Anstrichfarbe, enthaltend eine Bindemittellösung gemäß Anspruch 8 und wenigstens ein darin dispergiertes Pigment oder Füllstoff.

## Claims

1. A pulverulent binder for paints, soluble in pure aliphates, containing pulverulent polymerisate particles which comprise, at least on the particle surface, a copolymerisate of:
60 to 95 wt.-% units of hardening monomers
A) 5 to 60 wt.-% units of isobutylmethacrylate,
B) 10 to 54.5 wt.-% units of cycloalkylmethacrylates
and 5 to 40 wt.-% units of at least aliphate-solubilising monomer from the group
C) alkylmethacrylate with 6 to 18 carbon atoms in the alkyl group,
wherein all weight percentages relate to the weight of the copolymerisate.

2. A binder according to claim 1, characterised in that the copolymerisate contains 0.1 to 10 wt.-% units of functional monomers with polar groups.

3. A binder according to claim 2, characterised in that the functional comonomer contains a hydroxyl group.

4. A binder according to one or more of claims 1 to 3, with a thickening effect, characterised in that the polymerisate contains 0.1 to 2 wt.-% of a multiply ethylenically-unsaturated, radically polymerisable monomer.

5. A binder according to one or more of claims 1 to 4, characterised in that the powder particles comprise an aliphate-soluble core material and an aliphate-soluble covering material, wherein the core material comprises a polymerisate or copolymerisate with a higher proportion of units of an alkyl methacrylate with 6 to 12 carbon atoms in the alkyl group than the shell material, and that the shell material is a copolymer according to one or more of claims 1 to 3.

6. A binder according to claim 5, characterised in that it is a jacketed pearl polymerisate with a mean particle diameter of 0.005 to 1 mm.

7. A binder according to claim 5, characterised in that it is a spray-dried emulsion polymerisate with core-shell structure.

8. A binder solution, containing a dissolved copolymer according to one or more of claims 1 to 7 and aroma-free benzine as a solvent.

9. A paint, containing a binder solution according to claim 8 and at least one pigment or filler dispersed therein.

## Revendications

1. Liants pulvérulents solubles dans les matériaux aliphatiques purs pour peintures, contenant des particules de polymère pulvérulentes, qui se composent, au moins à la surface des particules, d'un copolymère de :
60 à 95 % en poids d'unités des monomères durcissants
A) 5 à 60 % en poids d'unités de méthacrylate d'isobutyle,
B) 10 à 54,5 % en poids d'unités de méthacrylates de cycloalkyle et
de 5 à 40 % en poids d'unités d'au moins un monomère solubilisant dans les matières aliphatiques, du groupe des
C) méthacrylates d'alkyle ayant de 6 à 18 atomes de carbone dans le radical alkyle,
tous les pourcentages pondéraux se rapportant au poids du copolymère.

2. Liant selon la revendication 1,
caractérisé en ce que
le copolymère contient de 0,1 à 10 % en poids d'unités de comonomères fonctionnels ayant des groupes polaires.

3. Liant selon la revendication 2,
caractérisé en ce que
le monomère fonctionnel contient un groupe hydroxyle.

4. Liant selon une ou plusieurs des revendications 1 à 3 à action d'épaississement,
caractérisé en ce que
le polymère contient de 0,1 à 2 % en poids d'un monomère polymérisable par voie radicalaire, polyéthyléniquement insaturé.

5. Liant selon une ou plusieurs des revendications 1 à 4,
caractérisé en ce que
les particules de poudre se composent d'un matériau de noyau soluble dans les matières aliphatiques et d'un matériau d'enveloppe soluble dans les matières aliphatiques, le matériau de noyau étant constitué d'un polymère ou copolymère ayant une proportion plus élevée d'unités d'un méthacrylate d'alkyle comportant de 6 à 12 atomes de carbone dans le radical alkyle que le matériau de l'enveloppe, et en ce que le matériau de l'enveloppe est un copolymère selon une ou plusieurs des revendications 1 à 3.

6. Liant selon la revendication 5,
caractérisé en ce qu'
il est un produit de polymérisation en émulsion sans enveloppe ayant un diamètre particulaire moyen de 0,005 à 1 mm.

7. Liant selon la revendication 5,
caractérisé en ce qu'
il s'agit d'un polymère en émulsion atomisé à constitution de noyau-enveloppe.

8. Solution de liant contenant un copolymère dissous selon une ou plusieurs des revendications 1 à 7 et de l'essence dépourvue de matières aromatiques comme solvant.

9. Peinture contenant une solution de liant selon la revendication 8 et au moins un pigment ou une charge qui y est dispersé(e).
